# EUROPEAN PATENT APPLICATION

(11) **EP 2 012 492 A1**
(43) Date of publication of application: **07.01.2009**
(21) Application number: 08102133.9
(22) Date of filing: 28.02.2008
(51) Int. Cl.: H04L 29/06, H04L 12/46, H04L 12/56

(54) **Communication system, IPsec tunnel termination device, and IPsec tunnel communication continuation method used for them**

(30) Priority: 07.03.2007 JP 2007056502
(71) Applicant: NEC Corporation, Minato-ku Tokyo (JP)
(72) Inventor: Momoi, Yasunori, Tokyo (JP)
(74) Representative: Betten & Resch

(57) **Abstract**

A control unit 15 of a connection destination device 1 assigns a connection destination device address to a virtual line unit 13. In response to an instruction from the control unit 15, the virtual line unit 13 sets a line (A) 11 as an active line to be used for communication and, to make it appear to an external device that the connection destination device address is assigned to the line (A) 11, notifies a preceding-stage device 2 that the line (A) 11 has the connection destination device address. Thereafter, the line (A) 11 is used to establish, communicate, or disconnect an IPsec tunnel from a connection source device 3 to the connection destination device 1.

## Description

### REFERENCE TO RELATED APPLICATION

This application is based upon and claims the benefit of the priority of Japanese patent application No. 2007-056.502, filed on March 07, 2007, the disclosure of which is incorporated herein in its entirety by reference thereto.

### FIELD OF THE INVENTION

The present invention relates to a communication system and an IPsec tunnel termination device, as well as an IPsec tunnel communication continuation method used for them and its program, and more particularly to a method for continuing IPsec tunnel communication when a line failure occurs in an IPsec(Internet Protocol security protocol) tunnel termination device.

### BACKGROUND OF THE INVENTION

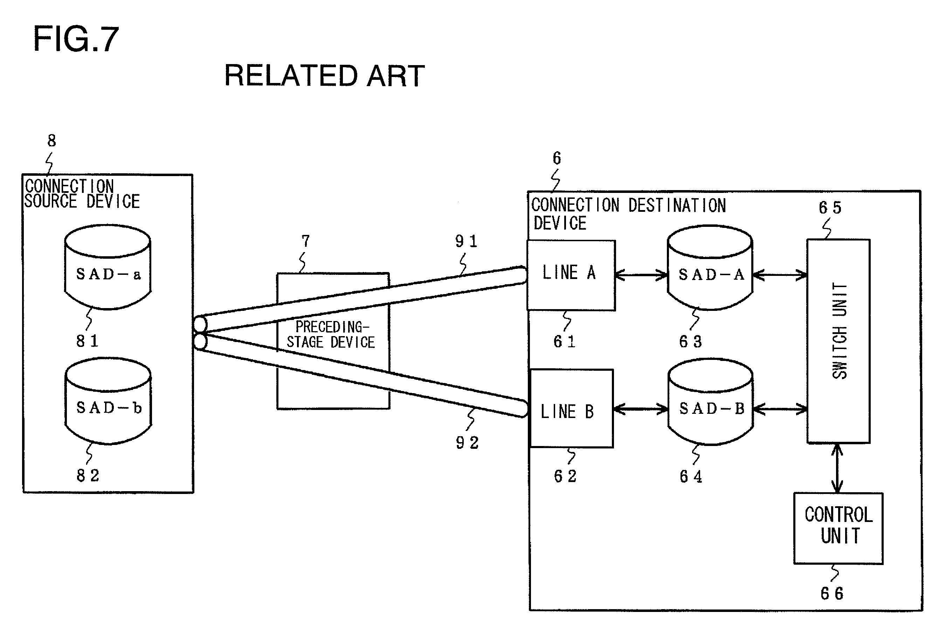

FIG. 7 is a diagram illustrating the configuration of a typical conventional communication system in which an IPsec tunnel to a connection source device is terminated at a connection destination device Conventionally, in the communication system in which communication is performed using IPsec tunnels and in which there are provided a connection destination device 6, a pneceding-stage device 7, and a connection source device 8, IPsec tunnels 91 and 92 are provided redundantly to support line redundancy as shown in FIG 7.

In FIG. 7, the connection destination device 6 comprises a line (A) 61, a line (B) 62, an SAD (Security Association Database)-A 63 and an SAD-B 64 in which IPsec connection (Security Association) information is stored, a switch unit 65, and a control unit 66. The connection source device 8 comprises an SAD-a 81 and an SAD-b 82.

In the connection destination device 6, address A and address B are assigned, respectively, to the line (A) 61 and line (B) 62. So, the connection source device 8 establishes, communicates via, or disconnects the IPsec tunnel 91 and 92 using address A of the line (A) 61 and address B of the line (B) 62 as the address of the connection destination device 6 (for example, see Patent Document 1).

### [Patent Document 1]

Japanese Patent Kokai Publication No. JP-P2005-341084A

### SUMMARY OF THE DISCLOSURE

The entire disclosures of the above mentioned patent document are incorporated herein by reference thereto.
One of the problems with the conventional communication system described above is that, when line redundancy is supported, the connection source device 8 must set up IPsec tunnels, one for each redundant lines, because an address is assigned to each line.

Another problem with the conventional communication system is that, because IPsec tunnels are redundantly provided, both the connection source device 8 and the connection destination device 6 must have SADs(SAD-A 63 and SAD-B 64 in connection destination device 6, and SAD-a 81 and SAD-b 82 in connection source device 8), one for each IPsec tunnel.

A still another problem with the conventional communication system is that the switch unit 65 and the control unit 66 must be installed in the connection destination device 6 to select an IPsec tunnel to be used and to control the selected IPsec tunnel. This problem applies also to the connection source device 8.

A still another problem with the conventional communication system is that, because the IPsec tunnels are switched when a line failure occurs in the connection destination device 6, the SADs in the connection source device 8 and the connection destination device 6 (SAD-A 63 and SAD-a 81, SAD-B 64 and SAD-b 82) must also be switched (exchanged). This means that the connection source device 8 and the connection destination device 6 must synchronize with each other in switching the SADs.

When communication is performed with an IPsec tunnel established, there is a one to one correspondence between the connection source address and the connection destination address. When line redundancy is supported for increasing the reliability of a connection destination device, two or more connection destination addresses, one for each redundant line, are required. This means that there is a one to N correspondence between the connection source address and the connection destination address. As more and more connection destination lines with the redundant configuration are used, addresses are required for the connection destination lines, one for each, and the IPsec tunnels must also be provided redundantly.

In addition, because the communication described above requires an IPsec tunnel for each redundant line, both the connection source device and the connection destination device must have SADs (redundantly), one for each connection destination line.

Furthermore, because the IPsec tunnels are switched when a line failure occurs in the connection destination device, the SADs in the connection source device and the connection destination device must be switched (exchanged) and, so, the connection source device and the connection destination device must synchronize with each other in switching the SADs.

It is an object of the present invention to solve the problems described above. More specifically, an object of the present invention is to provide a communication system and an IPsec tunnel termination device, as well as an IPsec tunnel communication continuation method for them and its program, for allowing a connection source device to establish, communicate, or disconnect an IPsec tunnel to a connection destination device with no concern about a line used by the connection destination device or about the line redundancy.

A communication system according to the present invention is a communication system in which an IPsec (Internet Protocol security protocol) tunnel to a connection source device is terminated at a connection destination device, wherein
the connection destination device comprises:
a plurality of physical lines; and
virtual line means that specifies one of the plurality of physical lines as an active line to be used for communication and that notifies an external device that the specified physical line is of a pre-assigned address of the connection destination device; and wherein the address of the connection destination device is assigned to the virtual line means to make it appear to the external device that the address is assigned to the active line.

An IPsec tunnel termination device according to the present invention is an IPsec termination device that terminates an IPsec tunnel, comprising:
a plurality of physical lines; and virtual line means that specifies one of the plurality of physical lines as an active line to be used for communication and that notifies an external device that the specified physical line is of a pre-assigned address wherein
the address of the IPsec termination device is assigned to the virtual line means to make it appear to the external device that the address is assigned to the active line.

An IPsec tunnel communication continuation method according to the present invention is an IPsec tunnel communication continuation method for use in a communication system in which an IPsec tunnel to a connection source device is terminated at a connection destination device wherein
the connection destination device notifies to an external device that a physical line, which is specified using virtual line means that specifies one of a plurality of physical lines as an active line to be used for communication, is of a pre-assigned address of the connection destination device and
the address of the connection destination device is assigned to the virtual line means to make it appear to the external device that the address is assigned to the active line.

A program according to the present invention is a program which is executed in an IPsec termination device that terminates an IPsec tunnel and which is executable by a computer, the program including the process of:
notifying to an external device that a physical line, which is specified using virtual line means that specifies one of a plurality of physical lines as an active line to be used for communication, is of a pre-assigned address of the connection destination device.

That is, in the communication system of the present invention, redundant IPsec (Internet Protocol security protocol) tunnels are not made redundant but redundant lines are provided in the connection destination device. So, even when a line failure occurs, the IPsec tunnel can be established or disconnected or an IPsec tunnel, established before the occurrence of the line failure, can be used continuously.

In the communication system of the present invention, the address of the connection destination device is assigned, not directly to a physical line such as line A, but to the virtual line unit so that it appears to an external device that the address is assigned to the activated line. This eliminates the need for setting multiple connection destination addresses and for creating multiple IPsec tunnels between the connection source device and the connection destination device, one for each redundant line. In addition, the communication system of the present invention eliminates the need for both the connection source device and the connection destination device to have SADs (Security Association Databases).

In the communication system of the present invention, the active line of the connection destination device is switched to another line when a line failure occurs in the connection destination device. So, the IPsec tunnel established before the error can be used continuously.

In the communication system of the present invention, when the redundant lines (master/slave) are used in the termination device where IPsec encryption/decryption processing is performed, the address of the termination device is assigned, not directly to the lines, but to the virtual line unit as described above, so that it appears to an external device that the address of the termination device is assigned to the active line. So, even when a line failure occurs, the IPsec tunnel can be established or disconnected or an IPsec tunnel, established before the line failure, can be used continuously.

More specifically, in the communication system of the present invention, the connection destination device that terminates the IPsec tunnel assigns the address X of the connection destination device to the virtual line unit in response to an instruction from the control unit. In the conventional method, the address X is an address assigned to a physical line such as line A.

In response to an instruction from the control unit, the virtual line unit specifies line A as an active line to be used for communication. To make it appear to an external device that the address X is assigned to line A, the virtual line unit notifies a preceding-stage device that line A has the address X, and the setting of the address X of the connection destination device is completed.

In this case, the establishment, communication, or disconnection of the IPsec tunnel from the connection source device to the connection destination device is performed using line A that has the address X of the connection destination device. However, when an error is generated on line A, the control unit requests the virtual line unit to switch the active line from line A to line B and, in response, the virtual line unit sets line B as an active line to be used for communication.

In addition, to make it appear to an external device that the address X is assigned to line B, the virtual line unit notifies the preceding-stage device that line B has the address X. Thereafter, the establishment, communication, or disconnection of the IPsec tunnel from the connection source device to the connection destination device is performed using line B that has the address X of the connection destination device.

If it appears to the connection source device that the address X of the connection destination device is assigned to one of line A and line B of the connection destination device, the connection source device can establish, communicate, or disconnect the IPsec tunnel to the connection destination device.

As described above, the communication system of the present invention assigns the address of the connection destination device, not directly to a physical line such as line A, but to the virtual line unit. In this way, the communication system implements line redundancy by making it appear to an external device that the address is assigned to an active line.

In addition, even when a line failure occurs in the connection destination device, the connection source device can establish or disconnect the IPsec tunnel or can continue the communication where the IPsec tunnel, established before the line failure was generated, is used.

The meritorious effects of the present invention are summarized as follows.
The present invention, which has the configuration described above and performs the operation as described above, achieves an effect that the connection source device can establish, communicate, on disconnect the IPsec tunnel to the connection destination device with no concern for the line used in the connection destination device or for line redundancy.

### BRIEF DESCRIPTION OF THE DRAWINGS

FIG. 1 is a block diagram showing the configuration of a communication system in one example of the present invention.
FIG. 2 is a diagram showing the operation of a connection destination device in one example of the present invention.
FIG. 3 is a diagram showing the operation of the connection destination device in one example of the present invention.
FIG. 4 is a flowchart showing the active line setting operation of the connection destination device in one example of the present invention.
FIG. 5 is a flowchart showing the active line setting switching operation performed by the connection destination device when a line failure occurs in one example of the present invention.
FIG. 6 is a block diagram showing the configuration of a connection destination device in another example of the present invention.
FIG. 7 is a block diagram showing the configuration of a communication system of a related art.

### PREFERRED MODES OF THE INVENTION

Embodiments of the present invention will be described more in detail with reference to the drawings.

### [First example]

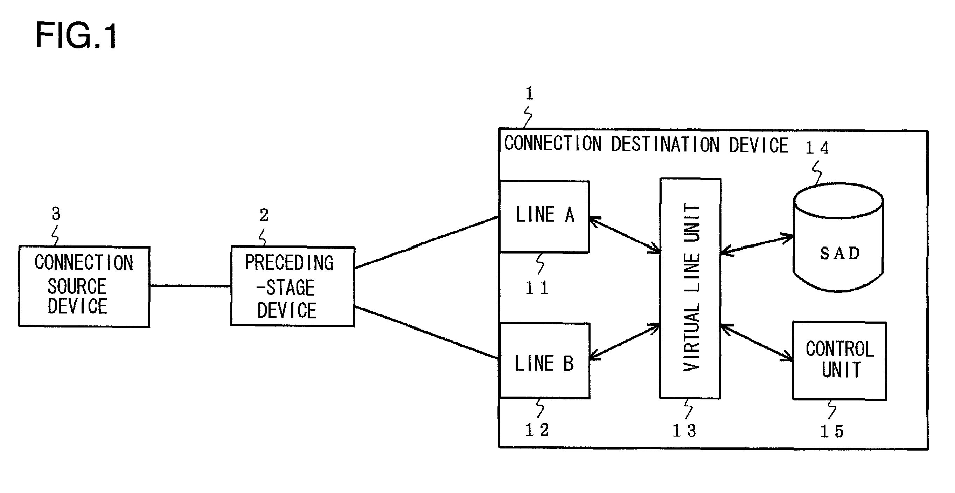

FIG. 1 is a block diagram showing the configuration of a communication system in one example of the present invention. Referring to FIG. 1, the communication system in one example of the present invention comprises a connection destination device 1, a preceding-stage device 2, and a connection source device 3.

The connection destination device 1 comprises a line (A) 11, a line (B) 12, a virtual line unit 13, a SAD (Security Association Database) 14 in which IPsec connection (Security Association) information is stored, and a control unit 15. Although the line (A) 11 and the line (B) 12 are physical lines, the addresses are not assigned directly to those lines in the connection destination device 1. The address of the connection destination device 1 is assigned to the virtual line unit 13.

The virtual line unit 13 has an interface (I/F) not only with the line (A) 11, line (B) 12, and control unit 15, but also with the SAD 14. In response to an instruction from the control unit 15, the virtual line unit 13 specifies the physical line (A) 11 or physical line (B) 12 as an active line that will be used for communication. In addition, to make it appear to an external device that the address X is assigned to the line (A) 11 or the line (B) 12, the virtual line unit 13 has the function to notify the preceding-stage device 2 that the line (A) 11 or the line (B) 12 has the address X.

The SAD 14, a Security Association Database for the IPsec (Internet Protocol security protocol), identifies an address, assigned to the virtual line unit 13, as the connection destination device address.

The control unit 15 has the function to assign an address to the virtual line unit 13 and to specify which line, line (A) or line (B) 12, the virtual line unit 13 is to activate.

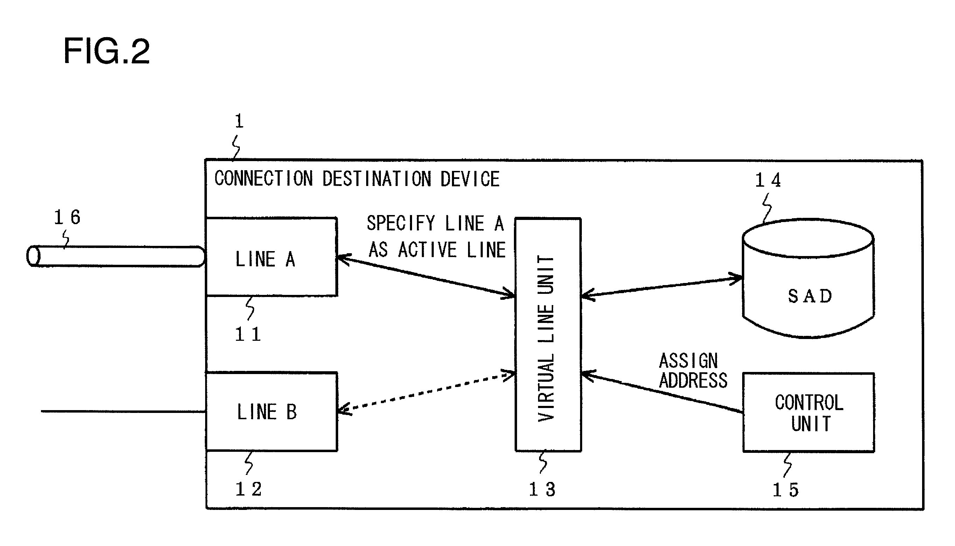

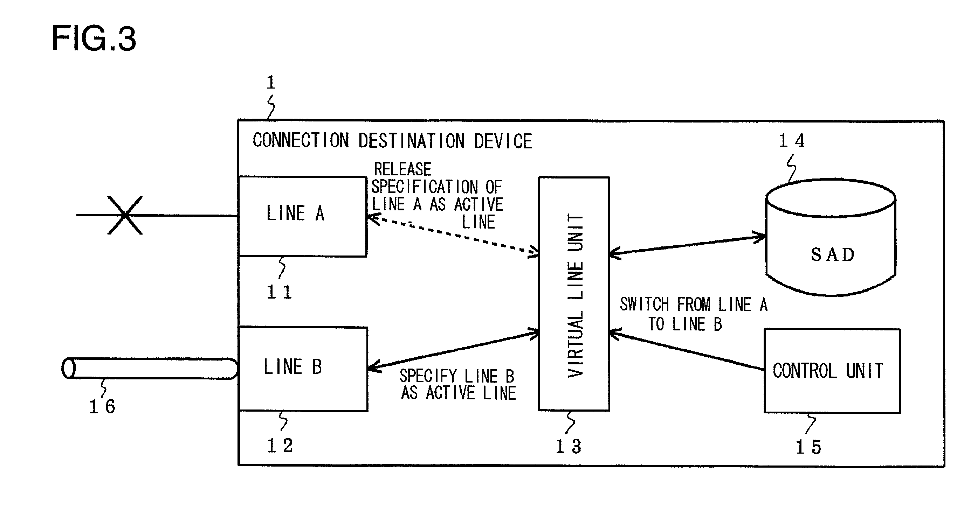

FIG. 2 and FIG. 3 are diagrams showing the operation of the connection destination device 1 in one example of the present invention.
FIG. 2 shows the operation in which the line (A) 11 is set as an active line, and FIG. 3 shows the operation in which the active line is switched from the line (A) 11 to the line (B) 12. The following describes the operation of the connection destination device 1 in one example of the present invention with reference to FIG. 1 to FIG. 3.

The control unit 15 assigns a connection destination device address to the virtual line unit 13. In response to the instruction from the control unit 15, the virtual line unit 13 sets the line (A) 11 as an active line that will be used for communication and, to make it appear to an external device that the connection destination device address is assigned to the line (A) 11, notifies the preceding-stage device 2 that the line (A) 11 is the connection destination device address. Thereafter, the line (A) 11 is used to establish, communicate, and disconnect an IPsec tunnel 16 from the connection source device 3 to the connection destination device 1.

On the other hand, when a failure is detected on the line (A) 11, the control unit 15 executes a switching request to the virtual line unit 13 to switch the active line from the line (A) 11 to the line (B) 12.

In response to the switching request from the control unit 15, the virtual line unit 13 sets the line (B) 12 as an active line. To make it appear to an external device that the connection destination device address is assigned to the line (B) 12, the virtual line unit 13 notifies the preceding-stage device 2 that the line (B) 12 is the connection destination device address. Thereafter, the line (B) 12 is used to establish, communicate, and disconnect an IPsec tunnel 16 from the connection source device 3 to the connection destination device 1.

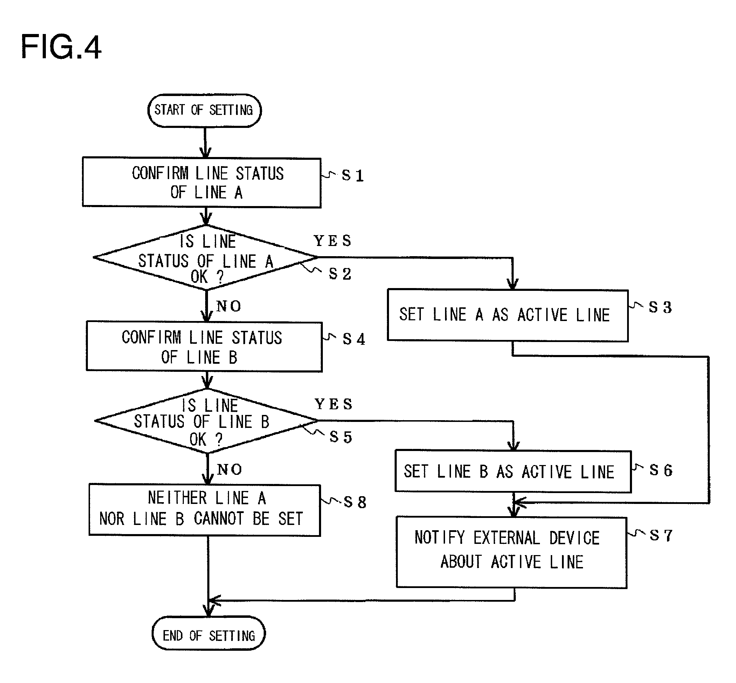

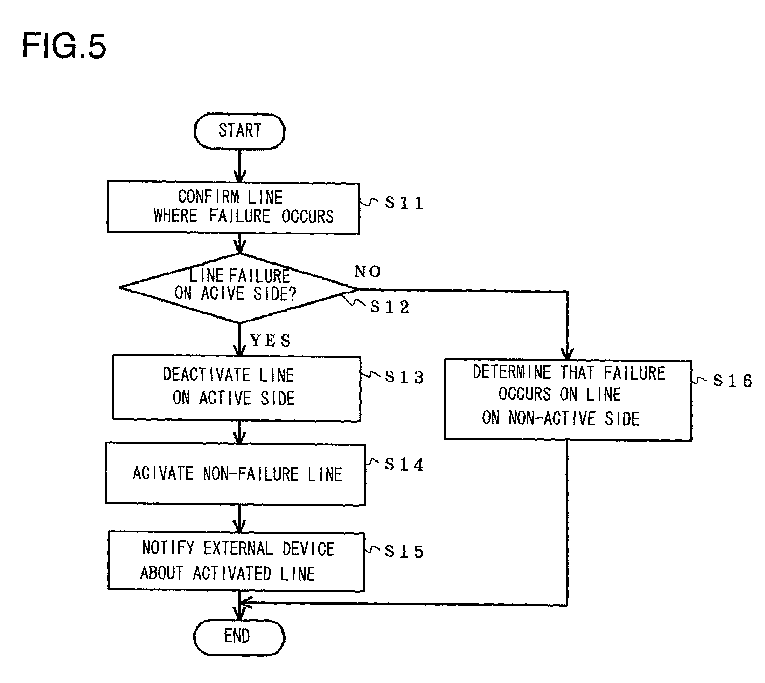

FIG. 4 is a flowchart showing the active line setting operation of the connection destination device 1 in one example of the present invention, and FIG. 5 is a flowchart showing the active line setting switching operation of the connection destination device 1 in one example of the present invention when a line failure occurs. The following describes the operation of the connection destination device 1 in one example of the present invention with reference to FIG. 1 to FIG. 5. The processing shown in FIG. 4 and FIG. 5 is implemented when the CPU (central processing unit) (not shown), one of the components of the control unit 15, executes a computer-executable program.

First, the following describes the active line setting of the connection destination device 1 with reference to FIG. 2 and FIG. 4.

When the active line setting operation is started, the control unit 15 confirms the line status of the line (A) 11 (step S1 in FIG.. 4) and determines if the line (A) 11 can be made effective (step S2 in FIG. 4). If it is confirmed that the line (A) 11 is effective, the control unit 15 instructs the virtual line unit 13 to set the line (A) 11 as an active line (step S3 in FIG. 4).

If the line (A) 11 is not effective, the control unit 15 confirms the line status of the line (B) 12 (step S4 in FIG. 4) and determines if the line (B) 12 can be made effective (step S5 in FIG. 4). If it is confirmed that the line (B) 12 is effective, the control unit 15 instructs the virtual line unit 13 to set the line (B) 12 as an active line (step S6 in FIG. 4). After the line selection is finished, the control unit 15 instructs the virtual line unit 13 to notify an external device about the active line (step S7 in FIG. 4), and completes the setting.

If it is determined that neither the line (A) 11 nor the line (B) 12 is effective, the control unit 15 determines that the lines cannot be set (step S8 in FIG. 4) and completes the active line setting operation.

Next, with reference to FIG. 3 and FIG. 5, the following describes the switching operation of active line setting by the connection destination device 1 when a line failure occurs.

If a notification of the occurrence of a line failure is received, the control unit 15 confirms on which line the failure has occurred (step S11 in FIG. 5). If it is determined that the line failure has occurred in the active line side (step S12 in FIG. 15), the control unit 15 deactivates the active side line (line (A) 11 in this example) (step S13 in FIG. 5) and activates the non-failure line (line (B) 12 in this example) (step S 14 in FIG. 5).

After that, the control unit 15 instructs the virtual line unit 13 to notify the external device that the non-failure line is activated (step S15 in FIG. 5) and completes the switching operation of active line setting that is performed when a line failure occurs.

If the active line was not subjected to a failure, the control unit 15 determines that the failure was on the non-active line (step S16 in FIG. 5) and completes the switching operation of the active line setting that is performed when a line failure occurs.

As described above, only one address is used for the connection destination device 1 in this example, and the line redundancy function can be provided without using redundant the IPsec tunnels from the connection source device 3 to the connection destination device 1.

In this example, the address of the connection destination device 1 is assigned, not directly to the physical lines, but to the virtual line unit 13. This configuration allows the connection source device 3 to establish, communicate, or disconnect an IPsec tunnel to the connection destination device 1 with no concern about the line used by the connection destination device 1 or about the line redundancy.

In this example, the address of the connection destination device 1 is assigned, not directly to the physical lines, but to the virtual line unit 13. This configuration eliminates the need for creating IPsec tunnels and the SADs, one for each redundant lines, between the connection source device and the connection destination device, thus increasing efficiency.

In this example, because the active line of the connection destination device 1 is switched when a line failure occurs in the connection destination device 1, the IPsec tunnel established before the generation of the error can be used continuously.

### [Second example]

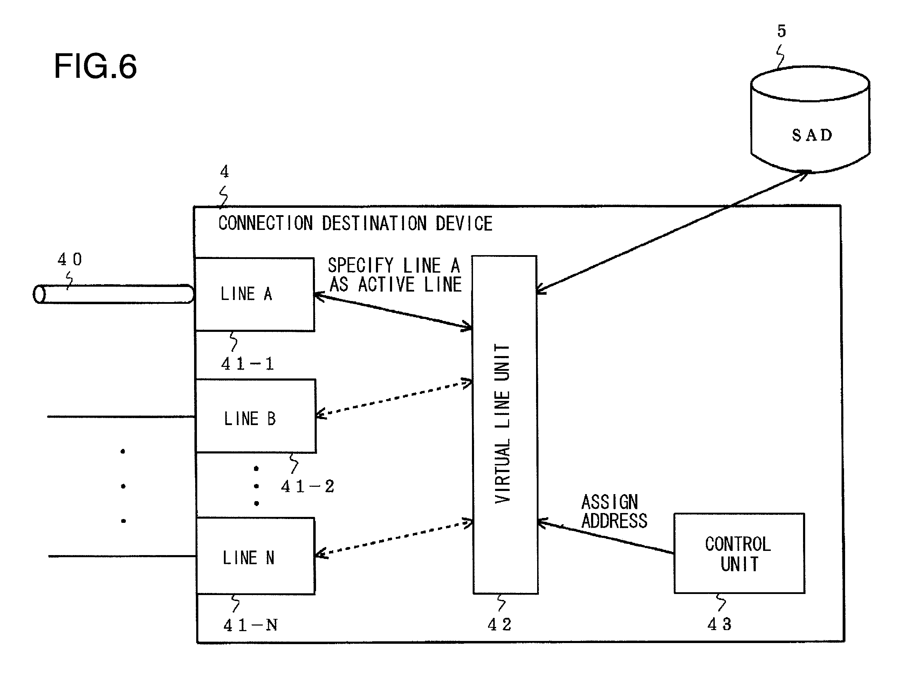

FIG. 6 is a block diagram showing the configuration of a connection destination device in another example of the present invention. The basic configuration of another example of the present invention shown in FIG. 6 is the same as that of one example of the present invention described above except further modifications to the configuration of a connection destination device 4. That is, the connection destination device 4 comprises line (A) 41-1, line (B) 41-2, , line (N) 41-N, a virtual line unit 42, and a control unit 43, and an externally installed SAD 5 is connected to the virtual line unit 13.

The SAD 5, which can be installed outside the connection destination device 4 as shown in FIG. 6, communicates with the connection destination device 4 via a general-purpose communication method such as TCP/IP(Tnansmission Control Protocol/Internet Protocol). This configuration minimizes the effect on the SAD 5 even when the connection destination device 4 fails.

In this example, the physical lines are not limited to two, line (A) 41-1 and line (B) 41-2, but one or more lines (N) 41-N are installed to increase the number of physical lines to N. This configuration also performs the same operation, and achieves the same effect, as that of one example of the present invention.

In addition, though installed redundantly in the connection destination device 4 in this example, the lines may also be installed redundantly in a connection source device 3.
It should be noted that other objects, features and aspects of the present invention will become apparent in the entire disclosure and that modifications may be done without departing the gist and scope of the present invention as disclosed herein and claimed as appended herewith
Also it should be noted that any combination of the disclosed and/or claimed elements, matters and/or items may fall under the modifications aforementioned.
According to one embodiment a control unit 15 of a connection destination device 1 assigns a connection destination device address to a virtual line unit 13. In response to an instruction from the control unit 15, the virtual line unit 13 sets a line (A) 11 as an active line to be used for communication and, to make it appear to an external device that the connection destination device address is assigned to the line (A) 11, notifies a preceding-stage device 2 that the line (A) 11 has the connection destination device address. Thereafter, the line (A) 11 is used to establish, communicate, or disconnect an IPsec tunnel from a connection source device 3 to the connection destination device 1.
Such an embodiment may be combined with any of the features defined in the claims or the description.

## Claims

1. A communication system in which an IPsec (Internet Protocol security protocol) tunnel to a connection source device is terminated at a connection destination device, wherein said connection destination device comprises:
a plurality of physical lines; and
virtual line means that specifies one of said plurality of physical lines as an active line to be used for communication and that notifies an external device that the specified physical line is of a pre-assigned address of said connection destination device;
the address of said connection destination device being assigned to said virtual line means to make it appear to said external device that the address is assigned to the active line.

2. The communication system according to claim 1, wherein said virtual line means switches the active line to another physical line when a line failure occurs in said connection destination device.

3. The communication system according to claim 1 or 2, wherein said connection destination device further comprises an SAD(Security Association Database) which is provided for common use by said plurality of physical lines and in which IPsec connection information is stored.

4. The communication system according to claim 1 or 2, wherein an SAD which is provided for common use by said plurality of physical lines and in which IPsec connection information is stored is provided outside said connection destination device.

5. An IPsec termination device that terminates an IPsec tunnel, comprising:
a plurality of physical lines; and
virtual line means that specifies one of said plurality of physical lines as an active line to be used for communication and that notifies an external device that the specified physical line is of a pre-assigned address; wherein
the address of said IPsec termination device is assigned to said virtual line means to make it appear to said external device that the address is assigned to the active line.

6. The IPsec termination device according to claim 5, wherein said virtual line means switches the active line to another physical line when a line failure occurs in said connection destination device.

7. The IPsec termination device according to claim 5 or 6, further comprising a SAD which is provided for common use by said plurality of physical lines and in which IPsec connection information is stored.

8. The IPsec termination device according to claim 5 or 6, wherein a SAD which is provided for common use by said plurality of physical lines and in which IPsec connection information is stored is provided outside said IPsec termination device.

9. An IPsec tunnel communication continuation method for use in a communication system in which an IPsec tunnel to a connection source device is terminated at a connection destination device, said method comprising:
notifying by said connection destination device to an external device that a physical line, which is specified using virtual line means that specifies one of a plurality of physical lines as an active line to be used for communication, is of a pre-assigned address of said connection destination device; and
assigning the address of said connection destination device to said virtual line means to make it appear to said external device that the address is assigned to the active line.

10. The IPsec tunnel communication continuation method according to claim 9, wherein said connection destination device switches the active line to another physical line by means of said virtual line means when a line failure occurs in said connection destination device.

11. The IPsec tunnel communication continuation method according to claim 9 or 10, wherein a SAD which is provided for common use by said plurality of physical lines and in which IPsec connection information is stored is provided in said connection destination device.

12. The IPsec tunnel communication continuation method according to claim 9 or 10, wherein a SAD which is provided for common use by said plurality of physical lines and in which IPsec connection information is stored is provided outside said connection destination device.

13. A program which is executed in an IPsec termination device that terminates an IPsec tunnel and which is executable by a computer, said program including the process of:
notifying to an external device that a physical line, which is specified using virtual line means that specifies one of a plurality of physical lines as an active line to be used for communication, is of a pre-assigned address of said connection destination device.
